# EUROPÄISCHE PATENTSCHRIFT

(11) **EP 0 697 314 B1**
(45) Veröffentlichungstag und Bekanntmachung des Hinweises auf die Patenterteilung: **15.03.2000**
(21) Anmeldenummer: 95109970.4
(22) Anmeldetag: 27.06.1995
(51) Int. Cl.: B60T 7/20, B60T 13/66, B60T 8/18

(54) **Verfahren zur lastabhängigen Bremsdruckregelung einer Fahrzeugkombination aus Zug- und Anhängefahrzeug**
Method for load dependant brake pressure control of a tractor-trailer combination
Procédé de contrôle de la pression de freinage selon la charge d'un combinaison tracteur remorque

(30) Priorität: 18.08.1994 DE 4429231
(43) Veröffentlichungstag der Anmeldung: 21.02.1996
(73) Patentinhaber: DaimlerChrysler AG, 70567 Stuttgart (DE)
(72) Erfinder: Reiner, Michael, D-70736 Fellbach (DE); Pressel, Joachim, D-70825 Korntal (DE)

(56) Entgegenhaltungen:
- EP-A- 0 370 671
- EP-A- 0 374 484
- WO-A-90/02675
- DE-A- 4 007 360
- DE-C- 4 130 848
- DE-C- 4 136 571

## Beschreibung

Die Erfindung bezieht sich auf ein Verfahren zur lastabhängigen Bremsdruckregelung einer aus Zug- und Anhängefahrzeug bestehenden Fahrzeugkombination, wobei unter dem Begriff Anhängefahrzeug im folgenden sowohl Deichselanhänger als auch Sattelauflieger zu verstehen sind. Die lastabhängige Bremsdruckregelung beinhaltet dabei eine beladungsabhängige Bremsdruckverteilung auf die verschiedenen Fahrzeugachsen, um trotz großer Achslastunterschiede jeweils größtmögliche Bremskräfte zur Verfügung zu stellen und ein instabiles Fahrverhalten, z.B. aufgrund von überbremsten Hinterachsen, zu vermeiden. Ein solches Verfahren eignet sich insbesondere für elektronisch geregelte Fremdkraft-Bremsanlagen, z.B. Druckluft-Bremsanlagen, bei denen die Bremsen und das im Zugfahrzeug vorhandene Anhängersteuerventil elektronisch regelbar betätigt werden können und zur Einstellung der Bremsdrücke für die Achsen des Zugfahrzeuges und des an einem Kupplungskopf in die Bremsleitung des Anhängefahrzeugs eingespeisten Bremsdrucks eine entsprechende Auswertelogik in einer Zentralelektronik des Zugfahrzeuges vorhanden ist. Von speziellem Interesse ist vorliegend die Einstellung eines passenden Wertes für den Bremsdruck des Anhängefahrzeuges, wobei vorausgesetzt wird, daß die Bremswirkung für das Anhängefahrzeug möglichst ebenso groß sein sollte, wie diejenige des Zugfahrzeuges, so daß das Anhängefahrzeug dem Zugfahrzeug bei möglichst geringer Längskraftübertragung folgt. Denn Abweichungen von diesem als optimal erkannten Verhalten führen zu instabilerem Fahrverhalten und unnötig hohem Bremsenverschleiß.

Ein derartiges Verfahren ist in der Patentschrift DE 41 36 571 C1 beschrieben. Voraussetzung für das dortige Verfahren ist, daß beispielsweise über eine Anhänger-Steckverbindung direkt erkannt werden kann, ob bei einem Bremsvorgang das Anhängefahrzeug tatsächlich an das Zugfahrzeug angekoppelt ist oder nicht. Während Bremsvorgängen ohne Anhängefahrzeug wird für das Zugfahrzeug eine Zuordnung der Ist-Fahrzeugverzögerung zum eingestellten Zugfahrzeugbremsdruck in Abhängigkeit von dessen Beladungszustand ermittelt und abgespeichert. Dabei wird der Beladungszustand des Zugfahrzeugs z.B. über Raddrehzahldifferenzen zwischen Vorder- und Hinterrädern ermittelt, die auf von der Hinterachslast abhängige Reifenradiusunterschiede zurückzuführen sind. Anhand der solchermaßen abgespeicherten Kennlinie der Zuordnung von Ist-Fahrzeugverzögerung und Bremsdruck wird dann bei nachfolgenden Bremsvorgängen während Fahrten mit angekoppeltem Anhängefahrzeug zum einen der zugehörige Zugfahrzeugbremsdruck und zum anderen ein Bremsdruck für das Anhängefahrzeug eingesteuert, der anhand eines gegebenen Verhältnisses zwischen Zugfahrzeug- und Anhängefahrzeugbremsdruck aus dem eingestellten Zugfahrzeugbremsdruck bestimmt wird. Speziell kann dieses Verhältnis anfangs den Wert eins haben, wodurch sich Zug- und Anhängefahrzeug innerhalb der Toleranz des durch eine entsprechende EG-Richtlinie vorgegebenen Abbremsungsbandes befinden. Im weiteren Verlauf des Bremsvorgangs wird dann eine mögliche Abweichung der Ist- von der gewünschten Soll-Fahrzeugverzögerung erfaßt und als korrekturbedürftiger Anhängefahrzeug-Bremsdruck interpretiert, wonach der Bremsdruck des Anhängefahrzeugs so lange nachregelnd verändert wird, bis die gewünschte Fahrzeugverzögerung erreicht ist.

Aus der Patentschrift DE 40 07 360 C2 ist ein Verfahren zur Bremsdruckverteilung auf die Achsen eines Kraftfahrzeuges bekannt, bei dem eine adaptive Anpassung der Bremsdruckverteilung, genauer des Verhältnisses zwischen Vorderachs- und Hinterachsbremsdruck, anhand eines Modells durchgeführt wird, bei dem sich dieses Verhältnis ausgehend von einem statischen Wert a linear mit der Soll-Fahrzeugverzögerung ändert, was sich als brauchbare Näherung herausstellt. Der statische Parameterwert a spiegelt dabei die Relation der statischen Achslasten des Zugfahrzeugs wider. Er ist signifikant vom Beladungszustand abhängig und wird durch die Bremskräfte eines Anhängefahrzeuges nicht nennenswert beeinflußt. Der jeweils aktuelle Wert der Bremsdruckverteilung wird jeweils so lange den nachfolgenden Bremsvorgängen zugrundegelegt, bis die überwachte, zwischenachsige Drehzahldifferenz einen vorgegebenen Grenzwert überschreitet, wonach in Abhängigkeit von diesem eine neue Bremsdruckverteilungsfunktion bestimmt wird.

In der Patentschrift DE 38 29 951 C2 wird ein Verfahren zur lastabhängigen Bremsdruckregelung angegeben, bei dem das zwischenachsige Bremsdruckverhältnis und ein das Gesamtbremsniveau bestimmender, als Verhältnis von Gesamtbremsdruck zu Soll-Fahrzeugverzögerung definierter Bezugsfaktor von Startwerten ausgehend selbstlernend nachgeführt werden, wenn unterhalb eines ABS-Eingriffsbereichs die zwischenachsige Raddrehzahldifferenz bzw. die Verzögerungsregeldifferenz vorgegebene Grenzwerte überschreiten.

Aus der Patentschrift DE 41 30 848 C1 ist ein Verfahren zur Bremsdruckregelung für ein Anhängefahrzeug bekannt, für das zwar nicht die Sensierung der Koppelkraft zwischen Zugfahrzeug und Anhängefahrzeug notwendig ist, statt dessen jedoch Raddrehzahlgeschwindigkeitsignale vom Anhänge- zum Zugfahrzeug übermittelt werden, um zu erkennen, ob das Anhängefahrzeug passend zum Zugfahrzeug abgebremst wird.

In der Patentschrift DE 42 10 576 C1 ist ein Verfahren zur Bestimmung von Bremskennwerten, d.h. dem jeweiligen Verhältnis aus der im Reifenaufstandspunkt erreichbaren Bremskraft und dem Bremsdruck im zugehörigen Bremszylinder, offenbart, das über entsprechende Sensorik die Bremsdrücke für die Achsen des Zugfahrzeuges bzw. für ein Anhängefahrzeug sowie über Raddrehzahlsensorik die Fahrzeuggeschwindigkeit erfaßt und anhand der solchermaßen während mehrerer Bremsvorgänge mit unterschiedlicher Bremsdruckverteilung gewonnenen Daten die zugehörigen Bremskennwerte erkennt. Aus den Bremskennwerten für die beiden Achsen des Zugfahrzeuges läßt sich auf dessen Beladungszustand schließen.

In der deutschen Patentanmeldung P 43 10 422.3-21 wird ein Verfahren zur Bestimmung des Bremsenanlegedrucks, d.h. der Differenz zwischen dem in den Bremszylindern gemessenen Druck und dem die Spannkraft der Bremsbacken erzeugenden Wirkdruck angegeben. Die Anlegedruckbestimmung erfolgt anhand der Überwachung von Bremsvorgängen mit unterschiedlicher Bremsdruckverteilung, wobei an bestimmten Rädern niedrige Bremsdrücke vorgegeben und die Bremskennwerte sowie die Bremsdrücke ermittelt werden, wozu eine entsprechende Bremsdrucksensorik vorgesehen ist. Die Kenntnis des Anlegedrucks erlaubt eine genauere Bremsdruckdosierung und durch Beobachtung von dessen zeitlichem Verlauf die Erkennung von Bremsendefekten.

Der Erfindung liegt als technisches Problem die Bereitstellung eines Verfahrens zur lastabhängigen Bremsdruckregelung einer aus Zug- und Anhängefahrzeug bestehenden Fahrzeugkombination zugrunde, das eine zuverlässige Einstellung des Bremsdrucks für das Anhängefahrzeug auch in Fällen ermöglicht, in denen keine Sensorikinformation vom Anhängefahrzeug verfügbar ist.

Dieses Problem wird durch ein Verfahren mit den Merkmalen des Patentanspruchs 1 gelöst. Das Verfahren kommt ohne Sensordaten vom Anhängefahrzeug aus, wobei auch kein Erkennungssignal notwendig ist, ob ein Anhängefahrzeug angekoppelt ist oder nicht. Ebensowenig ist eine Sensierung der Koppelkraft zwischen Zug- und Anhängefahrzeug erforderlich. Es genügt vielmehr allein die Verwendung der elektronischen Bremsregelung des Zugfahrzeuges unter Benutzung des im Zugfahrzeug vorhandenen Anhängerbremsdrucksteuerventils und einer Möglichkeit der Erfassung des Zugfahrzeug-Beladungszustands, die z.B. indirekt über die Erfassung von Raddrehzahlen des Zugfahrzeuges möglich ist. Das Verfahren benutzt ein zu diesem Zweck vorab, z.B. spezifisch für den jeweiligen Fahrzeugtyp, für das Zugfahrzeug allein ermitteltes und abgespeichertes Kennfeld über die Abhängigkeit des Bezugsfaktors vom Fahrzeugzustand, wobei letzterer insbesondere eine Beladungszustandsinformation beinhaltet. Dabei wird ein Normalbereichsband vorgegeben, so daß jedem Fahrzeugzustand ein Intervall tolerierbarer Bezugsfaktorwerte zugeordnet ist.

Zu Beginn eines Bremsvorgangs wird dann anhand der festgestellten, gewünschten Soll-Fahrzeugverzögerung und dem abgelegten Kennfeld für den momentanen Beladungszustand des Zugfahrzeuges ein im zugehörigen Normalbereich, zweckmäßigerweise etwa in der Mitte desselben, liegender Bezugsfaktorwert ermittelt und gemäß diesem der Gesamtbremsdruck für das Zugfahrzeug festgelegt. Außerdem wird anfangs für das Anhängefahrzeug ein innerhalb eines vorgegebenen Abbremsungsbandes, vorzugsweise wiederum in einem mittleren Bereich des zum gewählten Zugfahrzeugbremsdruck gehörigen Abbremsungsbandintervalls, liegender Bremsdruck für das Anhängefahrzeug eingestellt, und zwar unabhängig davon, ob tatsächlich ein Anhängefahrzeug angekoppelt ist oder nicht. Ebenfalls unabhängig von einem angekoppelten Anhängefahrzeug wird im weiteren Verlauf des Bremsvorgangs im Fall einer Regelabweichung des sich ergebenden Fahrzeugverzögerungswertes zunächst versucht, eine solche Abweichung durch adaptive Nachführung des Bezugsfaktorwertes und Einstellen eines zugehörigen Gesamtbremsdrucks im Zugfahrzeug auszuregeln. Solange bei dieser Nachführung der Bezugsfaktorwert innerhalb des abgelegten Normalbereichsbandes verbleibt, wird der anfangs eingestellte Bremsdruck für das Anhängefahrzeug nicht verändert, da im Rahmen derartiger Verzögerungsregelabweichungen nicht zwangsweise auf ein im Vergleich zum Zugfahrzeug zu schwach oder zu stark bremsendes Anhängefahrzeug geschlossen werden kann, sondern diese Abweichungen zunächst als normale Streuungen der Bremswirkung des Zugfahrzeuges, die durch das Normalbereichsband umfaßt werden, interpretiert werden. Erst wenn der Bezugsfaktor während der Nachführung das Normalbereichsband verläßt, wird dies dahingehend interpretiert, daß eine ungeeignete Bremswirkung des Anhängefahrzeugs vorliegt. Der Bremsdruck für das Anhängefahrzeug wird daraufhin so verändert, d.h. erhöht oder erniedrigt, daß der vorliegenden Regelabweichung der Fahrzeugverzögerung entgegengewirkt wird, beispielsweise so lange, bis der Bezugsfaktorwert im weiteren Verlauf des Bremsvorgangs wieder in das Normalbereichsband gelangt oder der aufgrund des Abbremsungsbandes, welches die zulässigen Bremsdrücke für das Anhängefahrzeug bei einem gegebenen Zugfahrzeugbremsdruck repräsentiert, maximal zulässige Bremsdruck für das Anhängefahrzeug erreicht ist.

Ersichtlich benötigt dieses Verfahren keinerlei Informationen vom Anhängefahrzeug und damit keine diesbezügliche Sensorik, wie Raddrehzahlsensoren am Anhängefahrzeug und/oder Koppelkraftsensorik. Es eignet sich daher z.B. auch für Anhängefahrzeuge, die nicht über ein Antiblockiersystem mit zugehöriger Raddrehzahlsensorik verfügen. Ebenso entfällt ein Sensor zum Erkennen, ob ein Anhängefahrzeug tatsächlich angekoppelt ist. Ein angekoppeltes und ggf. nicht geeignet mitbremsendes Anhängefahrzeug wird vielmehr indirekt dadurch erkannt, daß es nicht gelingt, die gewünschte Fahrzeugverzögerung durch adaptive Nachführung des Bezugsfaktors innerhalb des für das Zugfahrzeug abgelegten Normalbereichsbandes zu erzielen.

In Weiterbildung der Erfindung nach Anspruch 2 wird, wenn der Bezugsfaktor bei der Nachführung das Normalbereichsband verlassen hat, der Bremsdruck für das Anhängefahrzeug analog zur vorhergehenden Bezugsfaktornachführung adaptiv in kleinen, vorgegebenen Stufen von ca. 0,05bar bis 0,2bar so lange erhöht bzw. erniedrigt, bis der Bezugsfaktorwert wieder innerhalb seines Normalbereichsbandes liegt.

In einer Weiterbildung der Erfindung nach Anspruch 3 wird zur Einstellung des Bremsdrucks am Anhängefahrzeug der Anlegedruck für dessen Radbremsen mit berücksichtigt, was die Genauigkeit des Verfahrens insbesondere für kleine Soll-Fahrzeugverzögerungen und damit kleinen einzustellenden Bremsdrücken erhöht. Dabei läßt sich in Erweiterung des oben angegebenen Verfahrens nach der deutschen Patentanmeldung P 43 10 422.3-21 auf Fahrzeugkombinationen mit einem Anhängefahrzeug unter Verwendung von Bremsdrucksensorik für die Achsen des Zugfahrzeugs und für den einzusteuernden Bremsdruck des Anhängefahrzeugs sowohl der Anlegedruck der Zugfahrzeugbremsen als auch ein gemittelter Anlegedruck aller Anhängefahrzeugbremsen bezogen auf den Bremsdruck am Bremsleitungskupplungskopf ermitteln. Dieser gemittelte Anlegedruck umfaßt daher nicht nur den eigentlich zum Anlegen der Radbremsen des Anhängefahrzeugs benötigten Bremsdruck, sondern auch die Summe aller Ansprechschwellen der in der Anhängerbremsanlage erbauten Ventile. So kann sich typischerweise z.B. bei einem eigentlichen Radbremsanlegedruck von ca. 0,5bar und einer Ansprechschwelle von ca. 0,4bar für alle Ventile ein auf den Kupplungskopf bezogener, gemittelter Anlegedruck des Anhängefahrzeuges von ca. 0,9bar ergeben.

In Weiterbildung der Erfindung nach Anspruch 4 wird zur Erfassung des Beladungszustandes des Zugfahrzeuges, der zur Einstellung des Startwertes für den Bezugsfaktor zu Beginn eines Bremsvorgangs benötigt wird, von der Kenntnis des statischen Parameterwertes a der zwischenachsigen Bremsdruckverteilung im Zugfahrzeug Gebrauch gemacht, wenn diese Bremsdruckverteilung im Zugfahrzeug anhand des aus der oben angegebenen Patentschrift DE 40 07 360 C2 bekannten Modells bestimmt wird, wobei bezüglich weiterer Details dieser Art der Ermittlung der zwischenachsigen Bremsdruckverteilung im Zugfahrzeug auf die genannte Patentschrift Bezug genommen wird. Aus dem Parameterwert a, der im übrigen nicht merklich von der Tatsache abhängt, ob ein Anhängefahrzeug angekoppelt ist oder nicht, läßt sich der Beladungszustand des Zugfahrzeugs ohne eigene Beladungssensorik allein anhand von Raddrehzahlinformationen ableiten.

Wenn im Zugfahrzeug eine Bremsdrucksensorik für die beiden Zugfahrzeugachsen und den eingesteuerten Anhängerbremsdruck vorhanden ist, läßt sich in Weiterbildung der Erfindung ein Verfahren gemäß Anspruch 5 durchführen, bei dem das abgelegte Kennfeld mit den Auslegungsdaten für das Zugfahrzeug hinsichtlich der Abhängigkeit des Bezugsfaktors wenigstens von dessen Beladungszustand aktualisiert wird. Zu diesem Zweck werden mit der vorhandenen Bremsdrucksensorik gemäß dem Verfahren nach der oben angegebenen Patentschrift DE 42 10 576 C1 Bremskennwerte wenigstens für die Zugfahrzeugachsen bestimmt, anhand derer dann ein für den jeweiligen Beladungszustand des Zugfahrzeugs geeignetes, normales Bereichs intervall des Bezugsfaktors im laufenden Fahrzeugbetrieb ermittelbar ist, wobei mit den so gewonnenen, aktualisierten Daten aus dem Normalbereichsband des Bezugsfaktors das abgelegte Kennfeld aktualisiert wird.

Eine bevorzugte Ausführungsform der Erfindung wird nachfolgend anhand der Zeichnungen beschrieben. Hierbei zeigen:
- Fig. 1: ein Diagramm der funktionalen Abhängigkeit des Bezugsfaktors eines Zugfahrzeuges von dessen Beladungszustand mit einem vorgegebenen Normalbereichsband und
- Fig. 2: ein Diagramm der funktionalen Abhängigkeit der Verzögerung vom eingesteuerten Bremsdruck für ein Anhängefahrzeug mit einem vorgeschriebenen Abbremsungsband.

Als Voraussetzung für die Durchführung des Verfahrens besitzt das Zugfahrzeug eine Raddrehzahlsensorik, wie sie Teil eines Antiblockiersystems ist, eine elektronisch geregelte Fremdkraft-Bremsanlage, ein Anhängersteuerventil zur Einsteuerung des Bremsdrucks in das ggf. angekoppelte Anhängefahrzeug sowie eine Auswertelogik innerhalb der zentralen Fahrzeugelektronik, in welcher der zur Verfahrensdurchführung erforderliche Algorithmus abgespeichert ist. Dagegen sind im Anhängefahrzeug keine speziellen Einrichtungen zur Durchführung des Verfahrens erforderlich, insbesondere braucht es nicht mit einem Antiblockiersystem oder mit Mitteln zur Erfassung und Übertragung von Anhängerraddrehzahlinformationen zum Zugfahrzeug ausgerüstet sein.

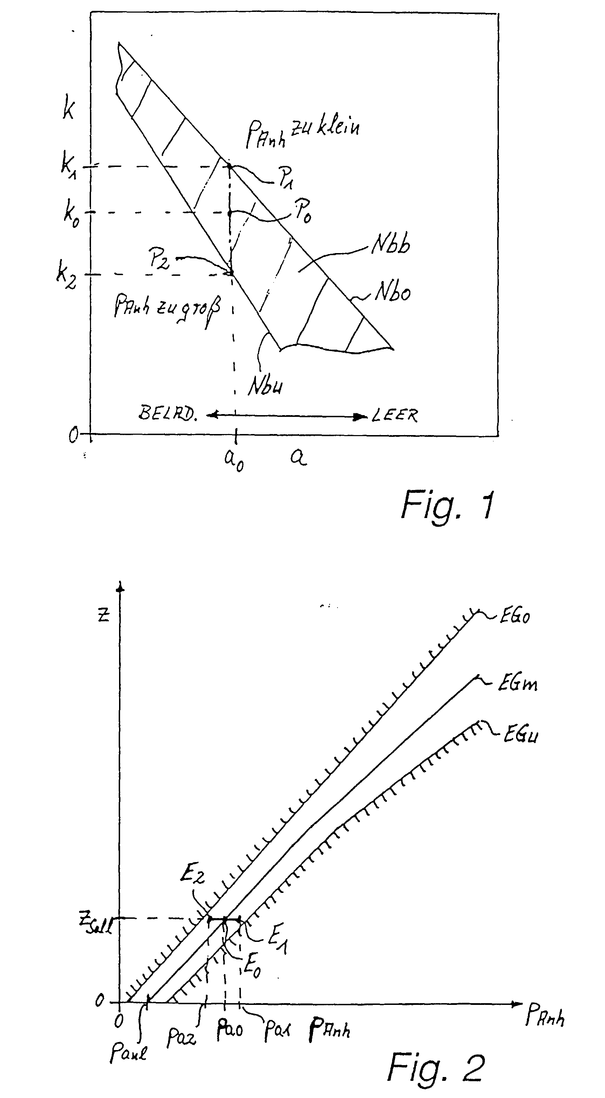

Ziel des Verfahrens ist es, durch geeignete Bremsdruckverteilung auf die Achsen des Zugfahrzeuges und auf das Anhängefahrzeug ggf. durch adaptive Anpassung stationärer Mittelwerte derselben bei üblichen Bremsvorgängen während einer Fahrt eine möglichst gleich große Abbremsung von Anhänge- und Zugfahrzeug zu erreichen. Dazu wird vorab das in Fig. 1 wiedergegebene Kennfeld des Bezugsfaktors (k), d.h. des Verhältnisses von einzusteuerndem Gesamtbremsdruck des Zugfahrzeuges zur jeweils angeforderten Soll-Fahrzeugverzögerung, in Abhängigkeit vom Beladungszustand (a) des Zugfahrzeuges auf der Basis von Auslegungsdaten für das Zugfahrzeug ermittelt und in der Zugfahrzeugelektronik abgespeichert. Dieses Kennfeld beinhaltet insbesondere ein von einer unteren Grenzgeraden (Nbu) und einer oberen Grenzgeraden (Nbo) begrenztes, in Fig. 1 schraffiert und ausschnittweise wiedergegebenes Normalbereichsband (Nbb). Dieses Band berücksichtigt normale Streuungen des Bezugsfaktorwertes von Bremse zu Bremse. Die Einheiten an den Achsen von Fig. 1 sind hierbei nicht näher spezifiziert, jedoch verringert sich in diesem Schaubild die Fahrzeugbeladung nach rechts, und der Bezugsfaktor erhöht sich nach oben. Des weiteren ist in der Zugfahrzeugelektronik ein in Fig. 2 gezeigtes Abbremsungsband für das Anhängefahrzeug abgelegt, das von einer unteren Grenzkurve (EGu) und einer oberen Grenzkurve (EGo) begrenzt wird und die Abbremsungsvorgabe gemäß einer entsprechenden EG-Richtlinie repräsentiert. Dieses Abbremsungsband gibt für eine gewünschte Verzögerung (z) den jeweils zulässigen Bereich von Anhängerbremsdruckwerten (p_{Anh}) an. Die ebenfalls in Fig. 2 dargestellte Mittellinie (EGm) des Abbremsungsbandes repräsentiert folglich eine Kennlinie für den zweckmäßigerweise für eine jeweils gewählte Soll-Anhängerverzögerung (zₛₒₗₗ) einzustellenden Gesamtbremsdruck (pₐ₀) des Anhängefahrzeuges. Diese Mittellinie schneidet die Abszisse bei einem endlichen Bremsdruckwert pₐₙ₁>0, der einem mittleren Anlegedruck für den vorliegenden Typ von Anhängefahrzeug darstellt, da erst bei Anhängerbremsdrücken größer als dieser Wert (pₐₙ₁) tatsächlich eine Bremswirkung des Anhängefahrzeuges einsetzt.

Wenn nun vom Fahrer zu Beginn eines Bremsvorgangs über eine entsprechende Bremspedalbetätigung eine bestimmte Soll-Fahrzeugverzögerung (zₛₒₗₗ) angefordert wird, wird von der verfahrensdurchführenden Logik zunächst der momentane Beladungszustand erfaßt, falls eine derartige Information nicht bereits vorliegt.

Hierzu wird der die Relation der statischen Achslasten des Zugfahrzeuges widerspiegelnde, konstante Parameteranteil der linearen Funktion p_{V}/p_{H}=a+b·zₛₒₗₗ des Verhältnisses von Vorderachsbremsdruck (p_{V}) zu Hinterachsbremsdruck (p_{H}) des Zugfahrzeuges in Abhängigkeit von der gewünschten Soll-Fahrzeugverzögerung (zₛₒₗₗ) herangezogen, wobei diese funktionale Abhängigkeit und damit der Wert der Parameterwerte a und b allein anhand von Raddrehzahlmessungen am Zugfahrzeug während des Fahrbetriebs aktualisiert, d.h. adaptiv nachgeführt werden kann, wie dies in der oben erwähnten Patentschrift DE 40 07 360 C2 beschrieben ist. Insbesondere wird diese Art der adaptiven Anpassung der Verteilung des Gesamtbremsdrucks des Zugfahrzeuges auf die Vorder- und Hinterachse auch im Rahmen des vorliegenden Verfahrens angewandt.

Mit Kenntnis des momentanen Zugfahrzeug-Beladungszustandes, d.h. des zugehörigen Parameterwertes a₀, wird anhand des abgespeicherten Normalbereichsbandes (Nbb) ein geeigneter Bezugsfaktorwert (k₀) gewählt, indem ein mittlerer Punkt (Pₒ) innerhalb des zu diesem Beladungszustand (a₀) gehörigen Intervalls aus dem Normalbereichsband (Nbb) ausgewählt wird, wobei dieses Intervall durch zwei Endpunkte (P₁, P₂) begrenzt ist, von denen der eine auf der oberen (Nbo) und der andere auf der unteren Grenzgeraden (Nbu) des Normalbereichsbandes (Nbb) liegt. Daraufhin wird anhand des ermittelten Bezugsfaktorwertes (k₀) der zugehörige Zugfahrzeug-Gesamtbremsdruck (p_{zug}) gemäß der Beziehung p_{zug}=k₀·zₛₒₗₗ eingestellt, welcher wiederum gemäß der aktuellen Modellfunktion über die Bremsdruckverteilung am Zugfahrzeug in Abhängigkeit von der aktuellen Soll-Fahrzeugverzögerung (zₛₒₗₗ) auf die beiden Zugfahrzeugachsen verteilt wird. Gleichzeitig wird für ein ggf. angekoppeltes Anhängefahrzeug ein Druck (pₐ₀) in die Bremsleitung des Kupplungskopfes für das Anhängefahrzeug eingesteuert, der, wie in Fig. 2 dargestellt, für die gewünschte Soll-Fahrzeugverzögerung (zₛₒₗₗ) in der Mitte des nach dem Abbremsungsband für das Anhängefahrzeug zulässigen Bereiches, d.h. auf einem auf der Bandmittellinie (EGm) liegenden Punkt (E₀), liegt. Diese Druckeinsteuerung erfolgt unabhängig davon, ob tatsächlich ein Anhängefahrzeug angekoppelt ist oder nicht.

Der Bremsvorgang mit diesen anfänglichen Bremsdruckeinstellungen wird nun daraufhin überwacht, ob sich eine Abweichung der Ist-Fahrzeugverzögerung von der gewünschten Soll-Fahrzeugverzögerung ergibt. Falls kein Anhängefahrzeug angekoppelt ist, sollte dies normalerweise nicht der Fall sein, da das abgelegte Kennfeld über den Bezugsfaktor (k) gerade so ausgelegt ist, daß sich die gewünschte Abbremsung ergeben sollte. Dieser Fall tritt ebenfalls nicht ein, wenn bei angekoppeltem Anhängefahrzeug letzteres bereits mit dem anfänglich in die Bremsleitung am Kupplungskopf eingesteuerten Anhängerbremsdruck dieselbe Abbremsung wie das Zugfahrzeug erreicht, so daß die gesamte Fahrzeugkombination aus Zug- und Anhängefahrzeug die gewünschte Soll-Fahrzeugverzögerung erfährt. Ein weiterer Regeleingriff ist dann nicht erforderlich, da das Ziel einer angemessenen Mitwirkung des Anhängefahrzeugs am Abbremsvorgang erfüllt ist.

Ergibt sich hingegen eine Abweichung der Ist-Fahrzeugverzögerung von der Soll-Fahrzeugverzögerung, so wird verfahrensgemäß zunächst versucht, diese Abweichung durch adaptive Nachführung des Bezugsfaktors (k), d.h. durch nachführende Veränderung des Gesamtbremsdrucks des Zugfahrzeugs auszuregeln. So wird bei erkannter, zu geringer Bremswirkung der Bezugsfaktor (k) vom Anfangswert (k₀) zu größeren Werten hin, d.h. vom Anfangspunkt (P₀) zum oberen Intervallendpunkt (P₁) hin, erhöht, während er bei erkannter, zu starker Bremswirkung vom Anfangspunkt (P₀) zum unteren Intervallendpunkt (P₂) hin erniedrigt wird. Läßt sich innerhalb dieses Bezugsfaktorregelbereiches die Regelabweichung der Fahrzeugverzögerung wieder auf null bringen, so ist damit eine passende Bremsdruckeinstellung für den Bremsvorgang erreicht, wobei die Regelabweichung der Verzögerung in diesem Fall auf die Zugfahrzeugbremsen zurückgeführt wird. Der Bremsdruck (pₐ₀) für das Anhängefahrzeug bleibt folglich während der Bezugsfaktornachführung und damit der Nachführung des Gesamtbremsdrucks für das Zugfahrzeug unverändert.

Wenn der Bezugsfaktorwert (k) während der Nachführung einen der Intervallendwerte (P₁, P₂) des zum momentanen Beladungszustand (a₀) gehörigen Intervalls aus dem Bezugsfaktor-Normalbereichsband (Nbb) über- bzw. unterschreitet und damit das Normalbereichsband (Nbb) verläßt, ohne daß die Regelabweichung der Fahrzeugverzögerung wieder auf null zurückgegangen ist, wird dies als ungeeigneter Bremsdruck für das Anhängefahrzeug interpretiert und daraufhin selbiger adaptiv in kleinen, den Bremsvorgang und die Fahrstabilität nicht störenden Stufen von ca. 0,05bar bis 0,2bar verändert. Speziell wird bei Überschreiten des oberen Endpunktes (P₁) durch den Bezugsfaktor, d.h. wenn dessen Wert den zugehörigen, für den vorliegenden Beladungszustand (a₀) maximal zulässigen Wert (k₁) überschreitet, dies als zu geringe Bremswirkung des Anhängefahrzeuges interpretiert, woraufhin der Anhängerbremsdruck (p_{Anh}) vom Anfangswert (pₐ₀) bis auf einen, einem zugehörigen Punkt (E₁) innerhalb des Abbremsungsbandes entsprechenden Wert (pₐ₁) erhöht wird. Diese Erhöhung wird beendet, sobald der neu eingestellte Anhängerbremsdruck (pₐ₁) zusammen mit einem Gesamtbremsdruck im Zugfahrzeug, der einem Bezugsfaktorwert innerhalb des Normalbereichsintervalls zwischen den Endpunkten (P₁) und (P₂) entspricht, ausreicht, die gewünschte Fahrzeugverzögerung zu erzielen. Dabei wird die Erhöhung des Anhängefahrzeugbremsdrucks (p_{Anh}) auf alle Fälle dann beendet, wenn er den durch die vorgegebene Soll-Fahrzeugverzögerung (zₛₒₗₗ) und die untere Abbremsungsbandlinie (EGu) festgelegten Wert erreicht, so daß ein Verlassen des Abbremsungsbandes verhindert wird.

Analog wird verfahren, wenn der Bezugsfaktor (k) den zum unteren Endpunkt (P₂) des Normalbereichsintervalls gehörigen Wert (k₂) unterschreitet, was als eine zu starke Abbremsung des Anhängefahrzeuges interpretiert wird. Ausgehend von dem Anfangspunkt (E₀) auf der Abbremsungsbandmittellinie (EGm) wird dann der Anhängerbremsdruck (p_{Anh}) vom Anfangswert (pₐ₀) entlang einer der gewählten Soll-Fahrzeugverzögerung (zₛₒₗₗ) entsprechenden Linie bis zu einem Punkt (E₂) innerhalb des Abbremsungsbandes auf einen Wert (pₐ₂) verringert, der zur Folge hat, daß sich die gewünschte, gleich große Abbremsung von Zug- und Anhängefahrzeug anschließend wieder über einen Zugfahrzeug-Gesamtbremsdruck realisieren läßt, dem ein innerhalb des Normalbereichsbandes (Nbb) liegender Bezugsfaktorwert zugeordnet ist. Die Verringerung des Anhängerbremsdrucks wird hierbei auf jeden Fall dann beendet, wenn durch diese adaptive Nachführung die obere Abbremsungsbandgrenzlinie (EGo) erreicht wird, um das Verlassen des Abbremsungsbandes zu unterbinden. Auf die oben beschriebene Weise wird eine möglichst gleichmäßige Mitwirkung von Zug- und Anhängefahrzeug an der Abbremsung der Fahrzeugkombination bewirkt. Es versteht sich, daß bei jedem beliebigen Beladungszustand des Zugfahrzeuges entsprechend zu verfahren ist.

Mit Hilfe dieses Verfahrens ist es folglich möglich, das Abbremsungsniveau des Anhängefahrzeugs ohne diesbezügliche Anhängefahrzeugsensorik zu erkennen und es während einer laufenden Bremsung durch Einsteuerung eines besser angepaßten Bremsleitungsdrucks innerhalb der zulässigen Grenzen adaptiv an das jeweilige Abbremsungsniveau des Zugfahrzeugs heranzuführen, wenn eine vorangegangene Bremsdruckanpassung am Zugfahrzeug noch nicht zur gewünschten Verzögerung geführt hat. Mit dem Verfahren wird bei äußerst geringem Sensorikaufwand eine sehr ausgewogene Verteilung der Bremsarbeit zwischen Zugfahrzeug und hinsichtlich ihres Bremsvermögens unterschiedlichsten Anhängefahrzeugen erreicht.

Eine weitere Genauigkeitsverbesserung läßt sich dadurch erzielen, daß in Erweiterung des in der deutschen Patentanmeldung P 43 10 422.3-21, auf dessen Inhalt bezüglich der Anlegedruckbestimmung für ein Zugfahrzeug Bezug genommen wird, auch der mittlere Anlegedruck aller Bremsen des Anhängefahrzeugs bezogen auf den Bremsdruck am Kupplungskopf ermittelt wird, der sowohl den zum Anlegen der Anhängerradbremsen benötigten Druck als auch die Summe aller Ansprechschwellen der in der Anhängerbremsanlage verbauten Ventile umfaßt. Für diese Anhängeranlegedruckbestimmung wird ganz analog zu dem Verfahren der genannten Patentanmeldung P 43 10 422.3-21 vorgegangen, wie es dort für einen dreiachsigen Lastkraftwagen erläutert ist. Dieser aktuelle Anlegedruck weicht möglicherweise von dem ansonsten vorausgesetzten, mittleren Anlegedruck (pₐₙ₁) ab, wie er von dem vorgegebenen Abbremsungsband berücksichtigt wird, und stellt daher ggf. eine genauere Basis für die Einstellung des Anhängerbremsdrucks insbesondere im Bereich von Bremsvorgängen mit sehr kleinen Verzögerungen, z.B. typischerweise betragsmäßig im Bereich von ca. 15% der Erdbeschleunigung, dar.

Des weiteren ist eine Aktualisierung des abgespeicherten Kennfeldes des Bezugsfaktors (k) in Abhängigkeit vom Beladungszustand (a) des Zugfahrzeugs möglich, wenn letzteres über eine Bremsdrucksensorik für die Bremsdrücke seiner einzelnen Achsen sowie für den einzusteuernden Anhängerbremsdruck verfügt. Mit einer derartigen Sensorik läßt sich das in der oben angegebenen Patentschrift DE 42 10 576 C1 beschriebene Verfahren zur Bestimmung von Bremskennwerten durchführen. Aus den auf diese Weise bestimmten Bremskennwerten in Verbindung mit dem ebenfalls ermittelten Beladungszustand des Zugfahrzeugs kann der jeweils geeignete Bezugsfaktorwert zur Einstellung des Gesamtbremsdrucks des Zugfahrzeugs bestimmt und auf diese Weise das bislang abgelegte Bezugsfaktorkennfeld für das Zugfahrzeug und insbesondere die Lage des Normalbereichsbandes aktualisiert werden, wobei Abweichungen von dem anfangs abgelegten Kennfeld z.B. durch Veränderungen der Bremseigenschaften der Zugfahrzeugbetriebsbremsen während deren Betriebsdauer verursacht sein können.

## Patentansprüche

1. Verfahren zur Bremsdruckregelung einer Fahrzeugkombination aus Zug- und Anhängefahrzeug,
**gekennzeichnet durch**
folgende, bei Anforderung einer bestimmten Soll-Fahrzeugverzögerung durchgeführte Schrittfolge:
- anhand eines abgelegten Kennfeldes für einen als Verhältnis von Zugfahrzeug-Gesamtbremsdruck (p_{zug}) zu Soll-Fahrzeugverzögerung definierten Bezugsfaktor (k) in Abhängigkeit von wenigstens eine Beladungszustandsinformation enthaltenden Zugfahrzeugzustandsdaten (a), wobei das Kennfeld ein Normalbereichsband (Nbb) von Bezugsfaktorwerten enthält, und des erfaßten momentanen Zugfahrzeugzustands (a₀) Ermitteln eines im Normalbereichsband liegenden, anfänglichen Bezugsfaktorwertes (k₀) und Einstellen eines durch letzteren bestimmten Zugfahrzeug-Gesamtbremsdruckwertes sowie eines für die gewählte Soll-Fahrzeugverzögerung innerhalb eines vorgegebenen Abbremsungsbandes liegenden Anhängefahrzeug-Bremsdrucks (pₐₙₕ) für das Anhängefahrzeug,
- im weiteren Verlauf des Bremsvorgangs Erfassen der Ist-Fahrzeugverzögerung und bei erkannter Abweichung von der Soll-Fahrzeugverzögerung zunächst Nachregeln des Zugfahrzeug-Gesamtbremsdrucks mittels Nachführung des Bezugsfaktorwertes innerhalb des Normalbereichsbandes und
- Nachführen des Bremsdrucks für das Anhängefahrzeug innerhalb des vorgegebenen Abbremsungsbandes, wenn bei der vorhergehenden Nachführung des Bezugsfaktorwertes letzterer einen Grenzpunkt (P₁, P₂) des Normalbereichsbandes erreicht.

2. Verfahren nach Anspruch 1,
**dadurch gekennzeichnet, daß**
die Nachführung des Bremsdrucks (p_{Anh}) für das Anhängefahrzeug adaptiv in Stufen von etwa 0,05bar bis 0,2bar so lange erfolgt, bis der Bezugsfaktor (k) für den zu diesem geänderten Anhängefahrzeug-Bremsdruck gehörigen Zugfahrzeug-Gesamtbremsdruck wieder innerhalb des Normalbereichsbandes (Nbb) liegt.

3. Verfahren nach Anspruch 1 oder 2,
**dadurch gekennzeichnet, daß**
ein mittlerer Anhängefahrzeug-Bremsenanlegedruck bezogen auf den eingesteuerten Anhängefahrzeug-Bremsdruck ermittelt wird, der den zum Anlegen der Radbremsen des Anhängefahrzeugs benötigten Druck sowie die Summe aller Ansprechschwellen der Bremsventile des Anhängefahrzeugs umfaßt und bei der Einstellung des zur gewählten Soll-Fahrzeugverzögerung gehörigen Anhängefahrzeug-Bremsdrucks berücksichtigt wird.

4. Verfahren nach einem der Ansprüche 1 bis 3,
**dadurch gekennzeichnet, daß**
eine adaptive Nachführung des anhand einer linearen Modellfunktion der Form p_{V}/p_{H}=a+b·zₛₒₗₗ als linear von der Soll-Fahrzeugverzögerung (zₛₒₗₗ) abhängig gewählten Verhältnisses von Vorderachsbremsdruck (p_{V}) zu Hinterachsbremsdruck (p_{H}) des Zugfahrzeugs unter Auswertung erfaßter Raddrehzahlinformationen des Zugfahrzeugs durchgeführt und aus dem sich daraus ergebenden Wert für den Parameter a der Beladungszustand des Zugfahrzeugs ermittelt wird.

5. Verfahren nach einem der Ansprüche 1 bis 4 für eine Fahrzeugkombination, bei dem das Zugfahrzeug mitBremsdrucksensoren ausgerüstet ist,
**dadurch gekennzeichnet, daß**
wenigstens für die Achsen des Zugfahrzeuges Bremskennwerte anhand von Radgeschwindigkeits- und Bremsdruckdaten aus Bremsvorgängen mit unterschiedlicher zwischenachsiger Bremsdruckverteilung bestimmt und daraus ein aktueller Bezugsfaktorwert für den jeweiligen Beladungszustand ermittelt wird, mit welchem das abgelegte Kennfeld für den Bezugsfaktor in Abhängigkeit vom Zugfahrzeug-Beladungszustand aktualisiert wird.

## Claims

1. A method for regulating braking pressure of a vehicle combination comprising towing vehicle and trailer car,
**characterised by**
the following sequence of steps implemented when a specific desired vehicle deceleration is requested:
- using a stored characteristics map for a reference factor (k) defined as being a ratio of towing vehicle-total braking pressure (P_{zug}) to desired vehicle deceleration depending on towing vehicle condition data (a) containing at least a load condition datum, the characteristics map containing a normal range band (Nbb) of reference factor values, and using the currently detected towing vehicle condition (a₀), determining an initial reference factor value (k₀) lying within the normal range band and, on the basis of the latter, setting, for the selected desired vehicle deceleration, a specific towing vehicle-total braking pressure value as well as a trailer car-braking pressure (pₐₙₕ) for the trailer car within a predetermined deceleration band,
- as the braking procedure continues, detecting the actual vehicle deceleration and if a variance from the desired vehicle deceleration is detected immediately correcting the towing vehicle-total braking pressure by adjusting the reference factor value within the normal range band and
- adjusting the braking pressure for the trailer car within the predetermined deceleration band if the preceding adjustment of the reference factor value for the latter reaches a threshold point (p₁, p₂) of the normal range band.

2. A method as claimed in claim 1,
**characterised in that**
the adjustment to the braking pressure (P_{Anh}) for the trailer car is applied adaptively in stages of approximately 0.05 bar to 0.2 bar until the reference factor (k) for the towing vehicle-total braking pressure belonging to this adjusted trailer car-braking pressure is restored to within the normal range band (Nbb).

3. A method as claimed in claim 1 or 2
**characterised in that**
a mean trailer car-applied braking pressure relative to the trailer car-braking pressure applied is determined, which incorporates the pressure needed to apply the wheel brakes of the trailer car as well as the sum of all operating thresholds of the braking valves of the trailer car, and is taken into account when setting the trailer car-braking pressure belonging to the selected desired vehicle deceleration.

4. A method as claimed in claim 1 to 3,
**characterised in that**
the ratio of front axle braking pressure (p_{V}) to rear axle braking pressure (p_{H}) of the towing vehicle is adaptively adjusted on the basis of a linear model function of the form p_{V}/p_{H}=a+b·zₛₒₗₗ as being linearly dependent on the desired vehicle deceleration (zₛₒₗₗ) whilst evaluating detected wheel-speed information of the trailer vehicle and the resultant value is used to derive the parameter a for the load condition of the towing vehicle.

5. A method as claimed in one of claims 1 to 4 for a combination vehicle in which the towing vehicle is fitted with braking-pressure sensors,
**characterised in that**
braking characteristic values are determined, at least for the axles of the towing vehicle, on the basis of wheel-speed and braking-pressure data from braking procedures of differing braking-force distribution between axles, and an up-to-date reference factor value for the respective load condition is derived therefrom, with which the stored characteristics map for the reference factors depending on the towing vehicle condition is updated.

## Revendications

1. Procédé de régulation de la pression de freinage d'une combinaison d'un tracteur et d'une remorque,
caractérisé par la succession de pas suivante, exécutée lors de la demande d'une décélération prescrite déterminée du véhicule :
à l'aide d'un champ de caractéristiques mémorisé pour un facteur de référence (k) défini comme rapport entre la pression de freinage totale du tracteur (p_{zug}) et la décélération prescrite du véhicule, en fonction de données (a) sur l'état du tracteur contenant au moins une information sur l'état de charge, le champ de caractéristiques contenant un domaine normal (Nbb) de valeurs du facteur de référence, et à l'aide de l'état instantané saisi (a₀) du tracteur, déterminer une valeur initiale (k₀), située dans le domaine normal, du facteur de référence et exercer une valeur de la pression de freinage totale du tracteur déterminée par cette valeur du facteur de référence et, pour la remorque, exercer une pression de freinage de la remorque (pₐₙₕ), située à l'intérieur d'une bande de freinage préalablement donnée, pour la décélération prescrite choisie du véhicule,
- lors de la poursuite du processus de freinage, saisir la décélération réelle du véhicule et, en cas d'écart reconnu avec la décélération prescrite du véhicule, réguler tout d'abord en reprise la pression de freinage totale du tracteur au moyen d'une correction adaptative en reprise de la valeur du facteur de référence à l'intérieur du domaine normal et
- corriger en reprise la pression de freinage pour la remorque à l'intérieur de la bande de freinage préalablement donnée si, lors de la correction précédente de la valeur du facteur de référence, cette dernière valeur atteint un point limite (P₁, P₂) du domaine normal.

2. Procédé selon la revendication 1,
caractérisé par le fait que
la correction en reprise de la pression de freinage (pₐₙₕ) pour la remorque s'effectue de façon adaptative par échelon d'environ 0,05 bars à 0,2 bars jusqu'à ce que le facteur de référence (k) pour la pression de freinage totale du tracteur correspondant à la pression de freinage de la remorque, modifiée en fonction de ce facteur, se situe à nouveau à l'intérieur du domaine normal (Nbb).

3. Procédé selon la revendication 1 ou 2,
caractérisé par le fait
qu'il est déterminé une pression moyenne à appliquer sur les freins de la remorque correspondant à la pression de freinage prescrite de la remorque; pression qui comprend la pression nécessaire pour appliquer les freins sur les roues de la remorque ainsi que la somme de tous les seuils de réponse des robinets des freins de la remorque, pression à appliquer dont il est tenu compte lorsqu'est exercée la pression de freinage du véhicule correspondant à la décélération prescrite choisie du véhicule.

4. Procédé selon l'une des revendications 1 à 3,
caractérisé par le fait
qu'est exécutée une correction adaptative en reprise du rapport choisi, à l'aide d'une fonction linéaire de modélisation de la forme p_{V}/p_{H} =a+b.zₛₒₗₗ, comme fonction linéaire de la décélération prescrite du véhicule (Z_{zoll}), entre la pression de freinage de l'essieu avant (pᵥ) et la pression de freinage de l'essieu arrière (p_{H}) du tracteur, avec traitement des informations sur la vitesse de rotation, saisie, des roues du tracteur et qu'à partir de la valeur, qui en résulte, pour le paramètre a est déterminé l'état de charge du tracteur.

5. Procédé selon l'une des revendications 1 à 4, pour une combinaison de véhicules dans le cas de laquelle le tracteur est équipé de détecteurs de la pression de freinage,
caractérisé par le fait
qu'au moins pour les essieux du tracteur sont établies des valeurs caractéristiques du freinage à l'aide de données sur la vitesse des roues et sur la pression de freinage provenant des processus de freinage à différentes répartitions de la pression de freinage entre les essieux, et qu'à partir de cela est déterminé, pour l'état de charge respectif, une valeur actuelle du facteur de référence avec laquelle le champ de caractéristiques mémorisé pour le facteur de référence est actualisé en fonction de l'état de charge du tracteur.
